# EUROPEAN PATENT SPECIFICATION

(11) **EP 0 556 512 B1**
(45) Date of publication and mention of the grant of the patent: **20.03.1996**
(21) Application number: 92310213.1
(22) Date of filing: 09.11.1992
(51) Int. Cl.: B65D 83/14, F16K 17/16

(54) **Rupturable pressure relieving apparatus and methods of manufacturing the same**
Zerbrechliche Druckentlastungsvorrichtung und Herstellungsverfahren
Appareil détendeur de rupture et procédé de manufacture

(30) Priority: 21.01.1992 US 822643
(43) Date of publication of application: 25.08.1993
(73) Proprietor: BS & B SAFETY SYSTEMS, INC., Tulsa Oklahoma (US)
(72) Inventor: Farwell, Stephen P., Owasso, Oklahoma 74055 (US)
(74) Representative: Allen, William Guy Fairfax

(56) References cited:
- EP-A- 0 198 664
- EP-A- 0 228 149
- DE-A- 2 359 382
- GB-A- 2 093 527
- US-A- 4 576 303
- US-A- 5 082 133

## Description

The present invention relates generally to rupturable pressure relieving apparatus and methods of manufacturing the same.

A variety of rupturable pressure relieving apparatus for containing fluids under pressure until a predetermined pressure level is exerted thereon have been developed and used heretofore. For example, battery cases and aerosol cans have included rupturable pressure relief areas or vents which function to relieve excessive fluid pressures from within the cases or cans. Also, rupture disk assemblies for containing pressurized fluids are commonly utilized for protecting vessels or systems connected thereto from reaching over-pressure conditions. The terms "structure(s)" and "container(s)" are used herein to broadly mean any apparatus, assembly or device for containing fluid pressure which includes a fluid pressure rupturable portion or part, e.g., rupture disks, rupture disk assemblies, aerosol and other containers for containing pressurized fluids, cases such as battery cases containing materials which can develop pressure upon overheating, etc.

Containers shown in US-A-4576303 each include a substantially frustum-shaped indentation formed in a wall or other portion thereof and at least one score formed on a part of the indentation. When a predetermined fluid pressure is exerted on the indentation, it inverts and tears along the score whereby a portion of the wall or part containing the indentation is opened and fluid pressure is relieved therethrough.

While such containers have achieved a high degree of success, when damaged during handling or installation or when subjected to cyclic pressure variations over a period of time, the frustum-shaped indentations in the containers have become deformed whereby they reverse and rupture prematurely, or they reverse and do not rupture until a pressure greater than the predetermined rupture pressure is exerted thereon.

GB-A-2093527 discloses a rupturable pressure relieving apparatus comprising a disk having a substantially circular indentation, forming a recess on one face and a protuberance on the other face, said indentation including a frusto-conical portion connected to a peripheral part of the disk and to a central dome-shaped portion, and in that the indentation is of a size with respect to the thickness of the disk, such that when a predetermined fluid pressure is exerted on the side of said disk having said protuberance thereon, said indentation inverts and ruptures to relieve fluid pressure therethrough.

The present invention is characterised in that said frusto-conical portion of said indentation is an offset frusto-conical portion.

Such a rupturable pressure relieving apparatus including substantially circular indentations formed therein having frusto-conical portions connected to dome shaped portions are less susceptible to premature failure.

The dome shaped portion of the indentation provides rigidity thereto whereby the indentation is less susceptible to premature failure due to damage or cyclic pressure variations. The dome shaped portion can also include at least one rigidity imparting embossment therein to further strengthen the indentation.

Methods of forming improved rupturable indentations in a plurality of members of uniform thickness whereby such members rupture at substantially the same selected rupture pressure are also provided.

In order that the present invention may more readily be understood, the following description is given, merely by way of example, reference being made to the accompanying drawings in which:-
Figure 1 is a side cross-sectional view of one embodiment of rupture disk assembly;
Figure 2 is a view similar to Figure 1 showing the rupture disk assembly after reversal and rupture have occurred;
Figure 3 is a cross-sectional view of a second embodiment including knife blades for severing the rupture disk upon reversal;
Figure 4 is a view similar to Figure 3 showing the rupture disk assembly after reversal and severing have occurred;
Figure 5 is an enlarged cross-sectional view of a rupture disk similar to that of Figure 1, but modified according to the invention;
Figure 6 is a top plan view of the rupture disk of Figure 5;
Figure 7 is a view similar to Figure 5 showing the rupture disk after reversal and partial rupture;
Figure 8 is a view similar to Figure 7 showing the rupture disk after complete rupture has occurred;
Figure 9 is a side partially sectional view of an aerosol can including a rupturable indentation of the present invention;
Figure 10 is a cross-section view taken along line 10-10 of Figure 9;
Figure 11 is a view similar to Figure 9 showing the container and indentation after reversal and rupture has occurred;
Figure 12 is a side cross-sectional view of an alternative form of the rupturable indentation of the present invention;
Figure 13 is a top plan view of the apparatus of Figure 12;
Figure 14 is a view similar to Figure 12 showing the indentation after reversal and partial rupture thereof;
Figure 15 is a view similar to Figure 14 showing the indentation after the complete rupture thereof;
Figure 16 is a side cross-sectional view of another form of the rupturable indentation of the present invention;
Figure 17 is a top plan view of the indentation of Figure 16;
Figure 18 is a view similar to Figure 16 showing the indentation after reversal and partial rupture;
Figure 19 is a view similar to Figure 18 showing the indentation after reversal and complete rupture has occurred;
Figure 20 is a side cross-sectional view of a rupturable indentation forming apparatus of the present invention and a relatively high pressure rupturable structure formed thereby; and
Figure 21 is a view of the rupturable indentation forming apparatus of Figure 20 and a relatively low pressure rupturable structure formed thereby.

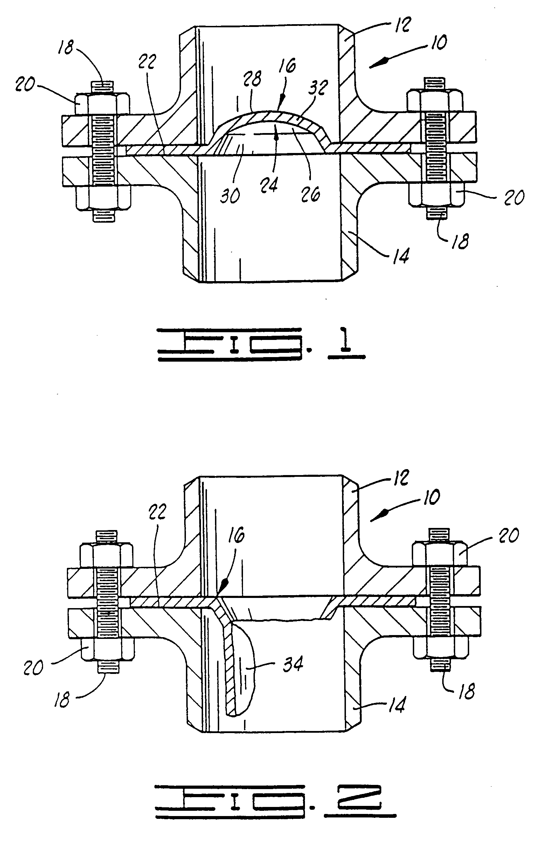

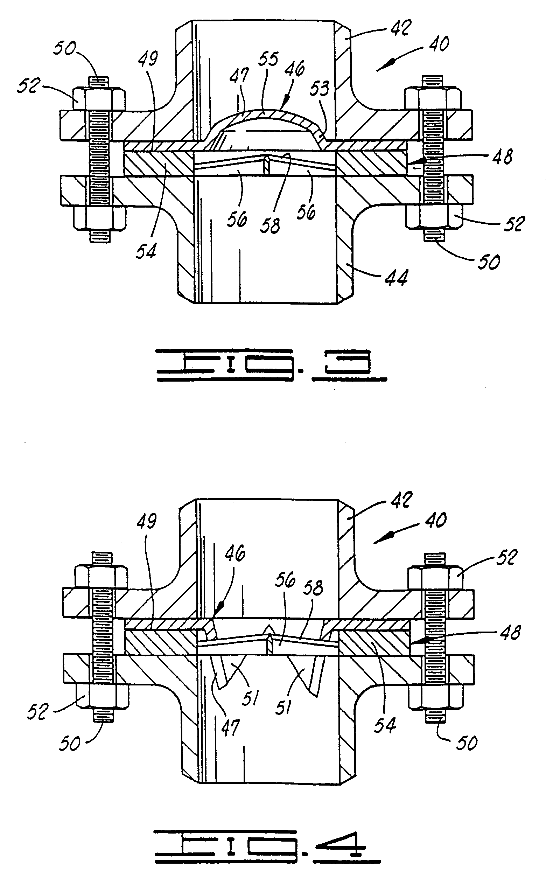

Referring to Figures 1 and 2, the rupture disk assembly 10 shown comprises inlet and outlet supporting members 12,14 having a rupture disk 16 clamped therebetween by means of a plurality of studs and nuts 18,20.

The rupture disk 16 basically includes an annular flange portion 22 connected to a substantially circular indentation 24, which forms a recess 26 in one side of the rupture disk 16 and a protuberance 28 on the other side thereof. The side of the rupture disk 16 having the protuberance 28 faces the inlet supporting member 12 whereby the force of the pressurized fluid is exerted thereon.

The indentation 24 comprises a right angle frustoconical portion 30 connected to a dome shaped portion 32. The indentation 24 is of a size with respect to the thickness of the portion of the rupture disk 16 containing it such that when a predetermined fluid pressure is exerted on the indentation 24, it inverts and ruptures (Figure 2) whereby pressurized fluid is relieved therethrough. Upon reversal and rupture of the rupture disk 16, a blow-out portion 34 may remain attached to the remainder of the disk 16 as shown, or the blow-out portion 34 may detach itself completely from the remainder of the rupture disk 16 or it may fragment whereby a plurality of separate loose pieces are formed. Thus, the rupture disk assembly 10 is only used in applications where the formation of loose pieces is of no consequence.

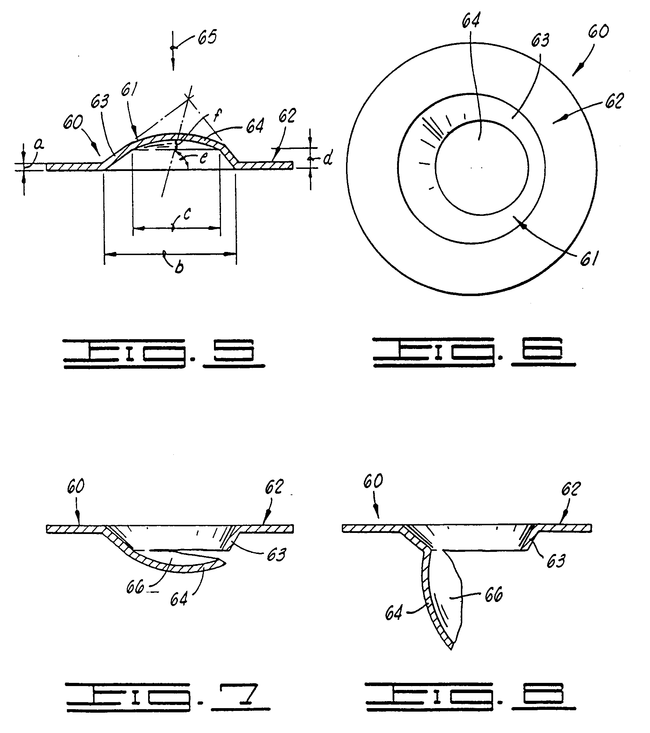

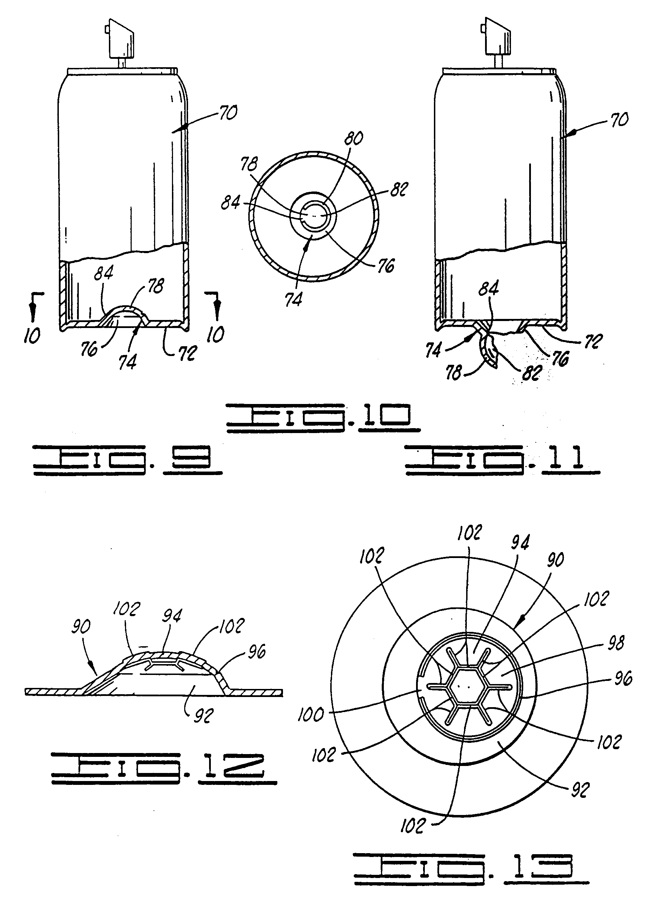

Figures 3 and 4 illustrate a disk assembly 40 which ensures that loose pieces or fragments are not produced when the rupture disk inverts and ruptures and comprises inlet and outlet supporting members 42,44 having a rupture disk 46 and a knife blade member 48 clamped therebetween by means of a plurality of studs and nuts 50,52. The rupture disk 46 is identical to disk 16 described above, and includes an annular flange portion 49 and an indentation 47 comprising a right frusto-conical portion 53 having a dome shaped portion 55 connected thereto.

The knife blade member 48 is positioned on the recess side of the rupture disk 46 and includes an annular flange member 54 having three or more, usually four, sharpened knife blades 56 connected interiorly thereof. The knife blades 56 are connected together at their interior ends and to the annular flange member 54 at their exterior ends whereby the sharpened portions 58 thereof face the rupture disk 46.

When the pressure exerted on the rupture disk 46 by pressurized fluid contained within the inlet supporting member 42 reaches a predetermined level, the indentation 47 reverses itself and is severed by the knife blades 56 into sector shaped blow-out portions 51 which remain attached to the annular flange portion 49 of the rupture disk 46.

In lieu of the knife blade member 48 for severing the rupture disk upon its reversal, the indentation 47 in the rupture disk 46 can include scores on a surface thereof which form lines of weakness therein. Upon reversal, the indentation tears along the lines of weakness without the formation of loose pieces.

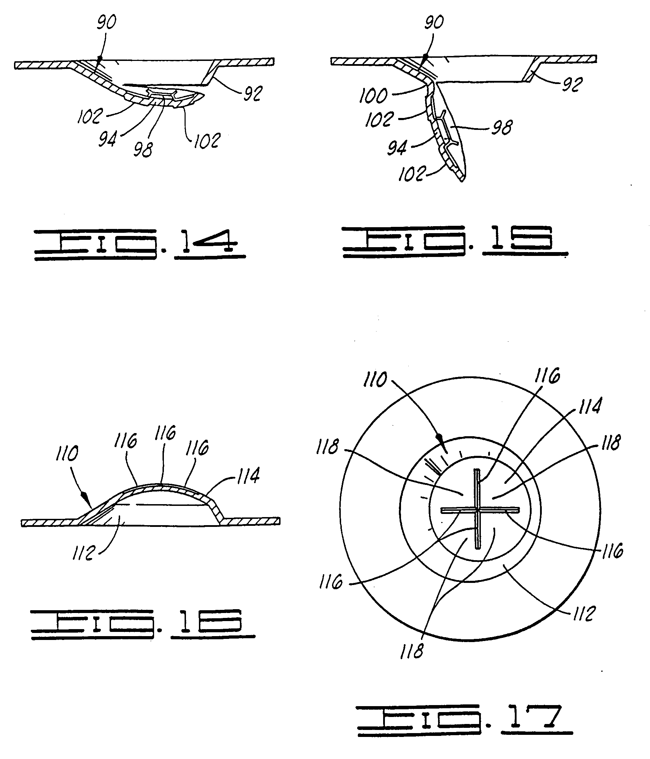

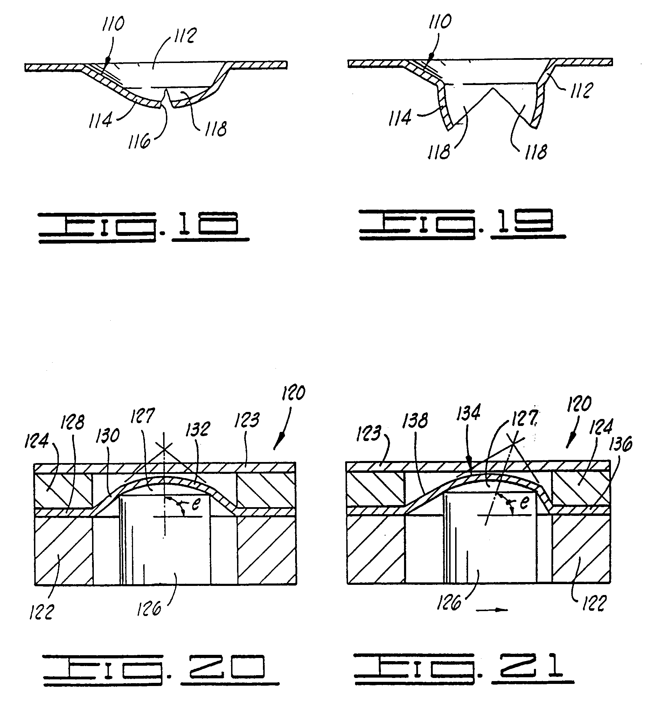

Referring now to Figures 5 through 8, a rupture disk 60 according to the invention is illustrated which is identical to the rupture disks 16,46 except that instead of a right frusto-conical portion, the rupture disk 60 has an offset frusto-conical portion. Surrounded by an annular flange portion 62 is a substantially circular indentation 61 having an offset frusto-conical portion 63 connected to a dome shaped portion 64. Fluid pressure is exerted on the protuberant side of the rupture disk 60 in the direction of the arrow 65.

The dome shaped portion 64 of the indentation 61, like the dome shaped portions 32,55 of the rupture disks 16,46, respectively, imparts rigidity to the frusto-conical portion 63 whereby the indentation 61 resists deformation due to damage, due to the force of pressurized fluid exerted thereon and/or due to cyclic pressure variations. It has been found that if the dome shaped portions 64,32,55 are flat or substantially flat, the fluid pressures exerted on them, particularly when the fluid pressures vary between high and low levels, can cause the frusto-conical portions to deform and to reverse prematurely. By forming the top portions of the indentations in dome shapes, the frusto-conical portions have much higher resistances to premature deformation. The dome shaped portions can be further strengthened by forming one or more rigidity imparting embossments therein.

In operation, pressure exerted on the protuberant side of the rupture disk 60 reaches the pressure at which the disk is designed to rupture, the dome shaped portion 64 and the frusto-conical portion 63 of the indentation 61 reverse themselves as shown in Figure 7. The material forming the reversed dome shaped portion 64 tears away from the reversed frusto-conical portion 63 whereby a blow-out area 66 detaches. After the reversal and initial rupture, if the pressurized fluids flowing through the rupture are appreciable, the blow-out portion 66 is moved to a fully open position as shown in Figure 8. However, as indicated above, without the benefit of knife blades or scores, the blow-out portion 34 may detach completely or fragment into a plurality of loose parts.

Referring to Figure 5, the variables determining the rupture pressure of the rupture disk 60 are the thickness "a" of the disk, the diameter "b" of the substantially circular indentation 61 at its connection to the annular flat flange portion 62, the diameter "c" of the substantially circular dome shaped portion 64 at its connection to the frusto-conical portion 63, the height "d" of the frusto-conical portion 63 and the offset angle "e" of the frusto-conical portion 63. These variables are determined by trial and error prior to manufacturing a group of rupture disks or other rupturable containers of this invention.

The offset angle "e" of the frusto-conical portion is the smallest angle formed between a line lying within the plane of the surrounding flat portion of the disk 60 and a line intersecting the centre of the substantially circular base of the frusto-conical portion and the vertex of the sides of the cone of which the frusto-conical portion 63 is a part. When the frusto-conical portion 63 is part of a substantially right circular cone, the offset angle "e" is about 90° and the indentation reverses and ruptures at a relatively high rupture pressure. When the offset angle "e" is less than 90°, the rupture pressure is also less, and the smaller the offset angle "e" the lower the rupture pressure. A rupturable indentation of the present invention having an offset angle less than about 45° is generally impractical. Thus, the term "offset frusto-conical portion" is used herein to mean a frusto-conical portion having an offset angle in the range of from about 45° up to about 90°.

Figures 9 to 11 show an alternative form of rupturable pressure relieving apparatus 70 which is illustrated in the form of an aerosol can, but it is to be understood that the description which follows is equally applicable to other containers which can contain pressurized fluids such as battery cases and the like.

The container 70 includes an end wall 72 of substantially uniform thickness which has a rupturable indentation 74 which is substantially circular and forms a recess exteriorly of the container 70 and a corresponding protuberance interiorly of the container. The indentation 74 comprises a frusto-conical portion 76, which is offset as shown, and a dome shaped portion 78.

As shown best in Figure 10, an arcuate score 80 is formed in a surface of the dome shaped portion 78 of the indentation 74. The term "score" is used herein to mean an elongated narrow groove formed in a surface of the rupturable part of a wall or disk whereby a corresponding line of weakness is created therein. One or more scores can be utilized to form various patterns such as circles, arcs of circles or crosses. The arcuate score 80 is positioned in the dome shaped portion 78 and defines a circular blow-out area 82 connected to the remainder of the wall 72 by an unscored hinged area 84.

When an over pressure condition exists within the container 70, the pressure exerted on the interior protuberant side of the wall 72 causes the indentation 74 to reverse and rupture as illustrated in Figure 5, the indentation cracking or tearing along the line of weakness created by the score 80 whereby a portion of the indentation corresponding to the blow-out area 82 is detached and bent outwardly but is retained by the unscored hinge area 84.

The rupture disk or other structure wall 90 illustrated in Figures 12 to 15 is identical to the indentation 61 of the rupture disk 60 described above except that the indentation 90 includes rigidity imparting embossments and an arcuate score therein. That is, the indentation 90 includes an offset frusto-conical portion 92 and a dome shaped portion 94, in which is disposed an arcuate score 96 which defines a circular rupture detachable blow-out area 98 (Figure 13) connected to the frusto-conical portion 92 by an unscored hinge area 100. While the score 96 can be formed in either the convex side of the concave side of the dome shaped portion 94, it is preferably formed in the convex side (the protuberant side of the indentation 90). Also, the score 96 is preferably positioned substantially coincident with the connection of the dome shaped portion 94 to the offset frusto-conical portion 92.

The dome shaped portion 94 further includes a plurality of embossments 102 which add rigidity to the indentation 90 whereby it has increased resistance to premature failure as a result of damage and/or cyclic pressure variations. The term "embossment(s)" is used herein to mean one or more small linear indentations or angular bends formed in the rupturable indentation. The embossments can be positioned in the frusto-conical portion 92 and/or in the dome shaped portion 94 and can define various patterns such as the hexagonal pattern shown in Figure 13, in which the embossments 102 are arranged in the dome shaped portion 92 whereby they form a centrally positioned hexagon, the corners of which intersect additional radially extending embossments 102.

In operation, upon the rupture pressure being reached, the indentation 90 reverses itself as shown in Figure 14, and the blow-out area 98 of the dome shaped portion 94 cracks and tears away from the frusto-conical portion 92 at the score 96, and the blow-out portion 98 detaches. After the initial reversal and rupture, the pressurized fluids flowing through the reversed and ruptured indentation move the blow-out portion 98 to the fully open position, but it is retained by the unscored hinge area 100 as shown in Figure 15.

The indentation 110 of Figures 14 to 19, is identical to the indentation 61 described above except that it includes centrally intersecting scores 116 in the dome shaped portion 114 thereof. That is, the indentation 110 includes an offset frusto-conical portion 112 connected to a dome shaped portion 114 having four radially extending scores 116 which intersect at the centre of the dome shaped portion 114 and extend to near the periphery thereof. The scores 116 define sector shaped blow-out areas 118 which are each connected to the remainder of the indentation 110 by the unscored areas between the outer ends of the scores 116. When the fluid pressure exerted on the protuberant side of the indentation 110 reaches the predetermined rupture pressure thereof, the indentation reverses itself and tears along the scores 116 as illustrated in Figure 18. Upon full opening, the blow-out portions 118 are fully detached and moved outwardly, but remain connected to the remaining portion of the indentation 110.

The improved rupturable pressure relief apparatus of the present invention can be manufactured using a single stamping dye apparatus 120 as illustrated in Figures 20 and 21, and which comprises a stationary annular base 122 and a vertically movable striker plate 123 having an annular clamping member 124 connected thereto. Positioned within the interior of the annular base 122 is a cylindrical forming die 126 having a dome shaped top 127. The die 126 is movable both vertically and horizontally. The apparatus 120 is utilized for manufacturing rupturable indentations in a group of structures of uniform thickness whereby each of the rupturable indentations has substantially the same rupture pressure.

In accordance with the method of the present invention and referring to Figures 20 and 21, a substantially circular indentation having a frusto-conical portion connected to a dome shaped portion is formed in a uniformly thick portion of a structure 128. This is accomplished by placing the uniformly thick portion of the structure 128 between the base member 122 and the clamping member 124. The striker plate 123 is lowered whereby the structure 128 is clamped between the base member 122 and the clamping member 124. An indentation 125 is formed in the structure 128 by moving the forming die 126 upwardly as illustrated in Figure 20. The resulting indentation 125 is comprised of a frusto-conical shaped portion 130 and a dome shaped portion 132. The formed structure 128 is then placed in a testing apparatus (not shown) whereby increasing fluid pressure, e.g., air pressure, is applied on the protuberant side of the formed structure 128 until the indentation 125 therein inverts and ruptures thereby determining the rupture pressure of the indentation. If the rupture pressure of the indentation 125 is lower or radically different from the desired rupture pressure, the thickness of the material forming the structure 128 and/or other design variables of the indentation 125 are changed and additional indentations are formed and tested until a structure 128 containing an indentation 125 having a rupture pressure higher than the desired rupture pressure is obtained.

Once an indentation 125 in a structure 128 having a rupture pressure higher than the desired rupture pressure is produced, the forming die 126 is moved horizontally as shown in Figure 21 whereby the offset angle "e" of the indentation 134 in the next formed structure 136 is smaller and the rupture pressure thereof is lowered. The indentation 136 is then tested to determine its rupture pressure and the steps of forming and testing while varying the offset angle "e" of the frusto-conical portion 138 of the indentation 136 are repeated as necessary until a desired rupture pressure is obtained. Once the desired rupture pressure is obtained, a plurality of structures are formed using the apparatus 120 whereby each structure produced has an indentation comprised of the same frusto-conical portion, the same dome shaped portion and the same offset angle "e" as that which resulted in the desired rupture pressure. Thus, in accordance with the method of this invention, once the basic configuration and thickness of the indentation have been determined it is only necessary to vary the offset angle of the frusto-conical portion to arrive at the desired rupture pressure. As will be understood, if one or more scores and/or embossments are included in the indentation, they are formed either simultaneously with or immediately subsequent to the indentation forming operation and prior to testing.

Thus, the method of forming rupturable indentations in a plurality of structures of uniform thickness whereby the indentations rupture at substantially the same selected rupture pressure is comprised of the following steps: (a) forming a substantially circular indentation in at least one of the structures whereby the indentation in at least one of the structures whereby the indentation has a frusto-conical portion connected to a dome shaped portion; (b) applying increasing fluid pressure on the protuberant side of the structure until the indentation inverts and ruptures thereby determining the rupture pressure of the indentation; (c) repeating steps (a) and (b) on additional structures while varying the offset angle of the frusto-conical portion of the indentation formed in accordance with step (a) until a selected rupture pressure is obtained in step (b); and then (d) performing step (a) on each of the remaining structures using the offset angle of the frusto-conical portion of the indentation which resulted in the selected rupture pressure in step (c).

Rigidity imparting embossments can be formed in the dome shaped portion of the indentation as a part of and simultaneously with the indentation forming procedure by including complimentary forming embossments on the dome shaped top 127 of the forming dye 126. Also, one of more scores can simultaneously be formed in the dome shaped portion of the indentation by including a score die attached to the striker plate 124 of the apparatus 120.

## Claims

1. A rupturable pressure relieving apparatus comprising a disk (16,45,60,72,90,110) having a substantially circular indentation (24,47,61,74,90,110), forming a recess (26) on one face and a protuberance (28) on the other face, said indentation including a frusto-conical portion (30,53,63,76,92,112) connected to a peripheral part of the disk and to a central dome-shaped portion (32,55,64,78,94,114), and said indentation being of a size with respect to the thickness of the disk, such that when a predetermined fluid pressure is exerted on the side of said disk having said protuberance thereon, said indentation inverts and ruptures to relieve fluid pressure therethrough, characterised in that said frusto-conical portion (53,63,76,92,112) of said indentation is an offset frusto-conical portion.

2. Apparatus according to claim 1, characterised in that said disk forms an integral part of a container (70), with said protuberance (28) on the interior of said container.

3. Apparatus according to claim 1, characterised in that said disk is a separate member mountable between an inlet support member (12,42) and an outlet support member (14,44), said inlet support member being adapted to be sealingly connected to a vessel or system containing pressurized fluid.

4. Apparatus according to claim 3, characterised in that knife blade means (56,58) are provided between said rupture disk and said outlet annular support member for severing said rupture disk when said indentation inverts.

5. Apparatus according to any preceding claim, characterised in that said indentation includes at least one score (80,96,116) formed in a surface thereof.

6. Apparatus according to claim 5, characterised in that said score is arcuate and defines a circular rupture detachable blow-out area (82,98) connected to the remainder of said wall by an unscored retaining hinge area (84,100).

7. Apparatus according to claim 5, characterised in that said indentation includes at least two scores (116) which intersect and define at least one rupture detachable sector shaped blow-out area connected to the remainder official search said wall by an unscored retaining hinge area.

8. Apparatus according to any preceding claim, characterised in that said indentation includes at least one rigidity imparting embossment (102) therein.

9. A method of forming rupturable indentations in a plurality of disks of uniform thickness, whereby such disks rupture at substantially the same selected rupture pressure comprising the steps of:
(a) forming a substantially circular indentation in at least one of said disks, said indentation having a frusto-conical portion connected to a dome shaped portion;
(b) applying increasing fluid pressure on the protuberant side of said disk until said indentation inverts and ruptures thereby determining the rupture pressure of said disk;
(c) repeating steps (a) and (b) on additional disks while varying the offset angle of said frusto-conical portion of said indentation formed in accordance with step (a) until a selected rupture pressure is obtained in step (b); and then
(d) performing step (a) on each of the remaining disks using the offset angle of said frusto-conical portion of said indentation which resulted in said selected rupture pressure in step (c).

10. A method according to claim 9, characterised in that step (a) includes forming at least one rigidity imparting embossment in said indentation.

11. A method according to claim 9 or 10, characterised in that step (a) includes forming at least one score in a surface of said indentation.

## Patentansprüche

1. Eine zerbrechliche Druckentlastungsvorrichtung, welche aus einer Scheibe besteht (16,45,60,72,90,110), die eine im wesentlichen kreisförmige Zahnung (24,47,61,74,90,110) aufweist, die eine Vertiefung (26) auf einer Seite bildet und auf der anderen Seite einen Vorsprung (28) aufweist, die obengenannte Vertiefung enthält einen kegelstumpfförmigen Teil (30,53,63,76,92,112), der mit einem peripheren Teil der Scheibe verbunden ist sowie mit einem kuppelförmigen Teil (32,55,64,78.94.114) und obengenannte Zahnung ist von einer Abmessung relativ zur Dicke der Scheibe, so daß, wenn ein vorherbestimmter Flüssigkeitsdruck auf die Seite von obengenannter Scheibe, welche obengenannten Vorsprung auf sich hat, ausgeübt wird, sich obengenannte Zahnung umkehrt und zerbricht, um Flüssigkeitsdruck durch sich hindurch abzulassen,
dadurch gekennzeichnet,
daß obengenannter kegelstumpfförmiger Teil (53,63,76,92,112) der obengenannten Zahnung ein gekröpfter, kegelstumpfförmiger Teil ist.

2. Vorrichtung entsprechend Anspruch 1,
dadurch gekennzeichnet,
daß obengenannte Scheibe einen integralen Teil eines Behälters (70) bildet, wobei obengenannter Vorsprung (28) im Inneren des obengenannten Behälters ist.

3. Vorrichtung entsprechend Anspruch 1,
dadurch gekennzeichnet,
daß obengenannte Scheibe ein Einzelteil ist, welches zwischen einem Einlaßunterstützungsteil (12,42) und einem Auslaßunterstützungsteil (14,44) montierbar ist, obengenanntes Einlaßunterstützungsteil ist so adaptiert, daß es versiegelnd mit einem Gefäß oder System, welches unter Druck stehende Flüssigkeit enthält, verbunden ist.

4. Vorrichtung entsprechend Anspruch 3,
dadurch gekennzeichnet,
daß Messerklingenmittel (56,58) zwischen obengenannter Bruchscheibe und obengenanntem Auslaß ringförmigem Unterstützungsteil vorgesehen sind, um obengenannte Bruchscheibe zu verstärken, wenn sich obengenannte Zahnung umkehrt.

5. Vorrichtung entsprechend einem der obengenannten Ansprüche,
dadurch gekennzeichnet,
daß obengenannte Zahnung zumindest einen Einschnitt (80,96,116) in einer seiner Oberflächen enthält.

6. Vorrichtung entsprechend Anspruch 5,
dadurch gekennzeichnet,
daß obengenannter Einschnitt bogenförmig ist und eine kreisförmige, ausbrechbare Ausblasfläche (82,98) definiert, welche mit dem Rest von obengenannter Wand durch eine nicht eingeschnittene, zurückhaltende Gelenkgegend verbunden ist.

7. Vorrichtung entsprechend Anspruch 5,
dadurch gekennzeichnet,
daß obengenannte Zahnung zumindest zwei Einschnitte (116) enthält, welche zumindest eine ausbrechbar sektorförmige Ausblasgegend abgrenzen und definieren, welche mit der überbleibenden, offiziellen, sondierenden, obengenannten Wand durch eine nicht eingeschnittene, zurückhaltende Gelenkfläche verbunden ist.

8. Vorrichtung entsprechend einem der vorhergehenden Ansprüche,
dadurch gekennzeichnet,
daß obengenannte Zahnung zumindest eine verstärkende Erhebung (102) aufweist.

9. Eine Methode zur Bildung von zerbrechbaren Zahnungen in einer Anzahl Scheiben von gleicher Dicke, wobei solche Scheiben im wesentlichen bei dem gleichen ausgewählten Brechdruck brechen, welche die Schritte enthält:
(a) Bildung einer im wesentlichen kreisförmigen Zahnung in zumindest einer der obengenannten Scheiben, obengenannte Zahnung hat einen kegelstumpfförmigen Teil, der mit einem kuppelförmigen Teil verbunden ist;
(b) Einwirkenlassen von erhöhtem Flüssigkeitsdruck auf die hervorstehende Seite obengenannter Scheibe bis obengenannte Zahnung sich umkehrt und bricht und dabei den Brechdruck obengenannter Scheibe bestimmt;
(c) das Wiederholen der Schritte (a) und (b) mit zusätzlichen Scheiben unter Variation des Kröpfwinkels von obengenanntem kegelstumpfförmigem Teil von obengenannter Zahnung, welche entsprechend Schritt (a) gebildet wurde, bis ein ausgewählter Brechdruck in Schritt (b) erhalten wird; und dann (d) die Ausführung des Schrittes (a) mit jeder der überbleibenden Scheiben, wobei der Kröpfwinkel von obengenanntem kegelstumpfförmigem Teil von obengenannter Zahnung benutzt wird, welcher in obengenanntem ausgewähltem Brechdruck in Schritt (c) resultierte.

10. Eine Methode entsprechend Anspruch 9,
dadurch gekennzeichnet,
daß Schritt (a) die Bildung von zumindest einem Stabilität gewährenden Vorsprung in obengenannter Zahnung enthält.

11. Eine Methode entsprechend Anspruch 9 oder 10,
dadurch gekennzeichnet,
daß Schritt (a) die Bildung von zumindest einem Einschnitt in einer Oberfläche von obengenannter Zahnung enthält.

## Revendications

1. Appareil de sécurité contre la surpression de type à élément de rupture comprenant un disque (16, 45, 60, 72, 90, 110), doté d'un renflement (24, 47, 61, 74, 90, 110) sensiblement circulaire, formant une concavité (26) sur une face et une protubérance (28) sur l'autre face, ledit renflement comprenant une partie tronconique (30, 53, 63, 76, 92, 112) reliée à une région périphérique du disque et à une partie centrale en forme de dôme (32, 55, 64, 78, 94, 114), la taille dudit renflement par rapport à l'épaisseur du disque étant telle que, lorsqu'une pression de fluide prédéterminée s'exerce sur la face bombée dudit disque, ledit renflement se renverse et rompt pour laisser s'échapper le fluide sous pression, caractérisé en ce que ladite partie tronconique (53, 63, 76, 92, 112) dudit renflement est inclinée.

2. Appareil selon la revendication 1, caractérisé en ce que ledit disque fait partie intégrante d'un récipient (70), ladite protubérance (28) étant située à l'intérieur dudit récipient.

3. Appareil selon la revendication 1, caractérisé en ce que ledit disque est un élément indépendant susceptible d'être monté entre un élément support d'entrée (12, 42) et un élément support de sortie (14, 44), ledit élément support d'entrée étant adapté pour être relié de manière étanche à un récipient ou un système contenant un fluide sous pression.

4. Appareil selon la revendication 3, caractérisé en ce que le dispositif à lame de couteau (56, 58) est agencé entre ledit disque de rupture et ledit élément support de sortie annulaire pour couper ledit disque de rupture lorsque ledit renflement se renverse.

5. Appareil selon l'une quelconque des revendications précédentes, caractérisé en ce que ledit renflement comporte au moins une entaille (80, 96, 116) pratiquée sur une surface de ce dernier.

6. Appareil selon la revendication 5 caractérisé en ce que ladite entaille affecte la forme d'un arc de cercle et définit une zone d'éclatement circulaire détachable (82, 98), raccordée au reste de ladite paroi par une zone charnière de retenue non entaillée (84, 100).

7. Appareil selon la revendication 5, caractérisé en ce que ledit renflement comporte au moins deux entailles (116) qui se croisent et définissent au moins une zone d'éclatement détachable en forme de secteurs, reliée au reste de ladite paroi par une zone charnière de retenue non entaillée.

8. Appareil selon l'une quelconque des revendications précédentes, caractérisé en ce que ledit renflement comprend au moins une nervure de rigidité (102).

9. Procédé de réalisation de renflements de rupture dans une pluralité de disques d'épaisseur uniforme, lesdits disques rompant à une pression de rupture sélectionnée sensiblement identique, ledit procédé comprenant les opérations suivantes :
(a) former un renflement sensiblement circulaire dans au moins l'un desdits disques, ledit renflement ayant une partie tronconique reliée à une partie en forme de dôme ;
(b) exercer une pression de fluide croissante sur le côté bombé dudit disque jusqu'à ce que ledit renflement se renverse et rompe, déterminant ainsi la pression de rupture dudit disque ;
(c) répéter les opérations (a) et (b) sur desdits disques supplémentaires tout en faisant varier l'angle de déport de ladite partie tronconique dudit renflement formé selon l'opération (a) jusqu'à l'obtention d'une pression de rupture sélectionnée lors de l'opération (b) ; et ensuite
(d) effectuer l'opération (a) sur chacun des disques restants en appliquant l'angle de déport de ladite partie tronconique dudit renflement qui a donné la pression de rupture sélectionnée lors de l'opération (c).

10. Procédé selon la revendication 9, caractérisé en ce que l'opération (a) comporte le formage d'au moins une nervure de rigidité dans ledit renflement.

11. Procédé selon la revendication 9 ou 10, caractérisé en ce que l'opération (a) comporte le formage d'au moins une entaille dans une surface dudit renflement.
